# EUROPEAN PATENT APPLICATION

(11) **EP 4 807 487 A1**
(43) Date of publication of application: **16.09.2026**
(21) Application number: 25275016.1
(22) Date of filing: 12.03.2025
(51) Int. Cl.: G05D 1/698

(54) **DECISION MAKING IN UNCREWED VEHICLES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Method, uncrewed vehicles and systems are described comprising: organising a plurality of uncrewed vehicles as a graph of nodes and edges; obtaining local observation data at one or more of said plurality of uncrewed vehicles from one or more sensors of the respective uncrewed vehicles; locally generating aggregated data at each uncrewed vehicle, based on the local observation data obtained at the respective uncrewed vehicle and, if available, remote data received from one or more neighbouring nodes; communicating information between nodes for use as said remote data; and taking one or more decisions at one or more of said nodes based, at least in part, on the aggregated data generated at the respective node.

## Description

### FIELD

The present invention relates to uncrewed vehicles (such as uncrewed aerial vehicles, uncrewed ground vehicles, uncrewed underwater vehicles etc.) and systems including a plurality of uncrewed devices (e.g. a swarm of uncrewed vehicles).

### BACKGROUND

An uncrewed vehicle can obtain sensor data and take decisions, for example as part of a battlefield scenario. However, it can be difficult for a group of such uncrewed vehicles to rapidly respond to changes in an operating environment. Co-ordinating a rapid response to changes is particularly difficult.

### SUMMARY

According to a first aspect, there is provided a method comprising: obtaining, at a first uncrewed vehicle, local observation data based, at least in part, on data from one or more sensors of the first uncrewed vehicle; receiving, at the first uncrewed vehicle, remote data from each of one or neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes; generating aggregated data (e.g. aggregated sensor data) for the first uncrewed vehicle based on the local observation data and the remote data in accordance with a message aggregation scheme; providing information to one or more of said neighbouring uncrewed vehicles for use as remote data by said neighbouring uncrewed vehicles; and taking one or more decisions based, at least in part, on the aggregated data for the first uncrewed vehicle, wherein the local observation data and the remote data include data relating to one or more first devices and said aggregated data includes information based on said data relating to said one or more first devices. Some or all of the one or more first devices may be intruder devices.

The data relating to one or more of said one or more first devices (e.g. intruder devices) may comprise one or more of: an indication of whether presence of a respective first device is detected by the respective uncrewed vehicle; a decaying value representing a last sighting of one of said first devices by the respective uncrewed vehicle; and a direction or location of one of said first devices detected by the first uncrewed vehicle.

In some example embodiments, the method further comprises receiving an algorithm for taking said decisions. The algorithm may be a machine-learning algorithm (such as a Multi-Agent Deep Reinforcement Learning, MADRL, algorithm), a hard-coded algorithm, or a combination thereof.

The one or more decisions may comprise changes to one or more of: a location of the first uncrewed vehicle within the graph of nodes; a speed of movement of the first uncrewed vehicle; and a direction of movement of the first uncrewed vehicle.

The remote data received from each of said one or more neighbouring uncrewed vehicles may comprise aggregated data (e.g. aggregated sensor data).

The information provided to said one or more neighbouring uncrewed vehicles may comprise aggregated data (e.g. aggregated sensor data).

In some example embodiments, the method further comprises detecting one or more of said one or more first devices.

The said local observation data may comprise one or more of: a current position of the first uncrewed vehicle; movement data for the first uncrewed vehicle; a monotonically decaying value representing a last sighting of one of said first devices; a direction from the first uncrewed vehicle to a location of the last sighting of one of said first devices; and a node degree indicating a number of neighbouring uncrewed vehicles in communication with the first uncrewed vehicle.

The aggregated data for the first uncrewed vehicle may comprise data relating to the uncrewed vehicles of the plurality, including the first uncrewed vehicle. Moreover, the data relating to the uncrewed vehicles of the plurality comprises one or more of: a location of the respective uncrewed vehicle; movement data relating to the respective uncrewed vehicle; and a bearing of one or more of said first devices from the respective uncrewed vehicle.

The aggregated data for the first uncrewed vehicle may comprise data relating to one or more second devices, wherein each second device is a protected device. Moreover, the local observation data may comprise a direction from the first uncrewed vehicle to one or more of said second (e.g. protected) devices. The data relating to the uncrewed vehicles of the plurality may comprise a bearing of one or more of said second (e.g. protected) devices from the respective uncrewed vehicle. The data relating to one or more of said one or more second (e.g. protected) devices may comprise one or more of: an indication of whether presence of a respective second device is detected by the respective uncrewed vehicle; and a direction or location of one of said second devices detected by the first uncrewed vehicle.

In some example embodiments, generating said aggregated data for the first uncrewed vehicle, in accordance with said message aggregation scheme, comprises one or more of: determining a maximum and/or a minimum of a plurality of datapoints; generating an average of a plurality of datapoints; and generating a weighted average of a plurality of datapoints.

The method may further comprise receiving an algorithm for implementing said message aggregation scheme. The algorithm may be a machine-learning algorithm (e.g. using graph machine-learning approaches), a hard-coded algorithm, or a combination thereof.

The said one or more sensors may comprise one or more of: one or more imaging devices; one or more radio frequency sensors; and one or more radar sensors.

The method may comprise adding a further uncrewed vehicle to the plurality of uncrewed vehicles organised as said graph of nodes and edges. Alternatively, or in addition, the method may comprise removing one of said uncrewed vehicles from the plurality of uncrewed vehicles organised as said graph of nodes and edges.

According to a second aspect, there is provided a method comprising: organising a plurality of uncrewed vehicles as a graph of nodes and edges, wherein each uncrewed vehicle of the plurality forms one of the said nodes and said edges represent communication links between said nodes, wherein each of the plurality of uncrewed vehicles has a position within the graph of nodes; obtaining local observation data at one or more of said plurality of uncrewed vehicles from one or more sensors of the respective uncrewed vehicles; locally generating aggregated data (e.g. aggregated sensor data) at each uncrewed vehicle, in accordance with a message aggregation scheme, based on the local observation data obtained at the respective uncrewed vehicle and, if available, remote data (e.g. aggregated data, such as aggregated sensor data) received from one or more neighbouring nodes; communicating information between nodes for use as said remote data; and taking one or more decisions at one or more of said nodes based, at least in part, on the aggregated data generated at the respective node, wherein the local observation data and the remote data include data relating to one or more first devices and said aggregated data includes information based on said data relating to said one or more first devices. Some or all of said first devices may be intruder devices.

The data relating to one or more of said one or more first devices (e.g. intruder devices) comprises one or more of: an indication of whether presence of a respective first device is detected by the respective uncrewed vehicle; a decaying value representing a last sighting of one of said first devices by the respective uncrewed vehicle; and a direction or location of one of said first devices detected by the first uncrewed vehicle.

The method may further comprise providing and/or receiving an algorithm for taking said decisions to one or more of said uncrewed vehicles (for instance using MADRL).

The said aggregated data comprises one or more of: data relating to the uncrewed vehicles of the plurality; data relating to one or more first devices, wherein each first device is a intruder device; and data relating to one or more second devices, wherein each second device is a protected device.

The method may further comprise providing and/or receiving an algorithm for implementing said rules-based message aggregation scheme to one or more of said nodes.

The one or more sensors comprises one or more of: one or more imaging devices; one or more radio frequency sensors; and one or more radar sensors.

The method may further comprise adding a further uncrewed vehicle to the plurality of uncrewed vehicles organised as said graph of nodes and edges. Alternatively, or in addition, the method may further comprise removing one of said uncrewed vehicles from the plurality of uncrewed vehicles organised as said graph of nodes and edges.

The one or more decisions may comprise changes to one or more of: a location of the first uncrewed vehicle within the graph of nodes; a speed of movement of the first uncrewed vehicle; and a direction of movement of the first uncrewed vehicle.

In some example embodiments, the method further comprises detecting one or more of said one or more first devices.

In some example embodiments, locally generating said aggregated data in accordance with said message aggregation scheme, comprises one or more of: determining a maximum and/or a minimum of a plurality of datapoints; generating an average of a plurality of datapoints; and generating a weighted average of a plurality of datapoints.

According to a third aspect, there is provided a first uncrewed vehicle (e.g. an uncrewed aerial vehicle, an uncrewed ground vehicle or an uncrewed underwater vehicle), the first uncrewed vehicle comprising: one or more sensors for obtaining local observation data relating to the first uncrewed vehicle; a communication module for receiving remote data from each of one or neighbouring uncrewed vehicles and for providing information to one or more of said neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes; a control module for generating aggregated data (e.g. aggregated sensor data) for the first uncrewed vehicle based on the local observation data and the remote data in accordance with a message aggregation scheme, wherein the communication module is configured to provide the generated aggregated data for the first uncrewed vehicle to one or more of said neighbouring uncrewed vehicles; and a processor for taking one or more decisions based, at least in part, on the aggregated data for the first uncrewed vehicle, wherein the local observation data and the remote data include data relating to one or more first devices and said aggregated data includes information based on said data relating to said one or more first devices. Some or all of the one or more first devices may be intruder devices.

The data relating to one or more of said one or more first devices (e.g. intruder devices) may comprise one or more of: an indication of whether presence of a respective first device is detected by the respective uncrewed vehicle; a decaying value representing a last sighting of one of said first devices by the respective uncrewed vehicle; and a direction or location of one of said first devices detected by the first uncrewed vehicle.

In some example embodiments, the first uncrewed vehicle is configured to receive an algorithm for taking said decisions.

The one or more decisions may comprise changes to one or more of: a location of the first uncrewed vehicle within the graph of nodes; a speed of movement of the first uncrewed vehicle; and a direction of movement of the first uncrewed vehicle.

The remote data received from each of said one or more neighbouring uncrewed vehicles may comprise aggregated data (e.g. aggregated sensor data).

The information provided to said one or more neighbouring uncrewed vehicles may comprise aggregated data (e.g. aggregated sensor data).

In some example embodiments, the first uncrewed vehicle is configured to detect one or more of said one or more first devices.

The said local observation data may comprise one or more of: a current position of the first uncrewed vehicle; movement data for the first uncrewed vehicle; a monotonically decaying value representing a last sighting of one of said first devices; a direction from the first uncrewed vehicle to a location of the last sighting of one of said first devices; and a node degree indicating a number of neighbouring uncrewed vehicles in communication with the first uncrewed vehicle.

The aggregated data for the first uncrewed vehicle may comprise data relating to the uncrewed vehicles of the plurality, including the first uncrewed vehicle. Moreover, the data relating to the uncrewed vehicles of the plurality comprises one or more of: a location of the respective uncrewed vehicle; movement data relating to the respective uncrewed vehicle; and a bearing of one or more of said first devices from the respective uncrewed vehicle.

The aggregated data for the first uncrewed vehicle may comprise data relating to one or more second devices, wherein each second device is a protected device. Moreover, the local observation data may comprise a direction from the first uncrewed vehicle to one or more of said second (e.g. protected) devices. The data relating to the uncrewed vehicles of the plurality may comprise a bearing of one or more of said second (e.g. protected) devices from the respective uncrewed vehicle. The data relating to one or more of said one or more second (e.g. protected) devices may comprise one or more of: an indication of whether presence of a respective second device is detected by the respective uncrewed vehicle; and a direction or location of one of said second devices detected by the first uncrewed vehicle.

In some example embodiments, generating said aggregated data for the first uncrewed vehicle, in accordance with said message aggregation scheme, comprises one or more of: determining a maximum and/or a minimum of a plurality of datapoints; generating an average of a plurality of datapoints; and generating a weighted average of a plurality of datapoints.

The first uncrewed vehicle may be further configured to receive an algorithm for implementing said message aggregation scheme.

The said one or more sensors may comprise one or more of: one or more imaging devices; one or more radio frequency sensors; and one or more radar sensors.

According to a fourth aspect, there is provided a system comprising a plurality of uncrewed vehicles organised as a graph of nodes and edges, wherein each uncrewed vehicle of the plurality forms one of the said nodes and said edges represent communication links between said nodes, wherein each of the plurality of uncrewed vehicles has a position within the graph of nodes. Some or all of the plurality of uncrewed vehicles may be as defined above with reference to the third aspect.

Some or all of the plurality of uncrewed vehicles may comprise one or more sensors for obtaining local observation data.

Some or all of the plurality of uncrewed vehicles may comprise a control module for locally generating aggregated data (e.g. aggregated sensor data) in accordance with a message aggregation scheme, based on the local observation data obtained at the respective uncrewed vehicle and, if available, remote data (e.g. aggregated data, such as aggregated sensor data) received from one or more neighbouring uncrewed vehicles.

Some or all of the plurality of uncrewed vehicles may comprise a communication module for communicating information between uncrewed vehicles of the plurality for use as said remote data.

Some or all of the plurality of uncrewed vehicles may comprise a control module for taking one or more decisions based, at least in part, on the aggregated data generated at the respective uncrewed vehicle, wherein the local observation data and the remote data include data relating to one or more first devices and said aggregated data includes information based on said data relating to said one or more first devices.

Some or all of said first devices may be intruder devices.

According to a fifth aspect, there is provided computer-readable instructions which, when executed by a computing apparatus, cause the computing apparatus to perform (at least) any method as described herein (including the methods of the first and second aspects described above).

According to a sixth aspect, there is provided a computer-readable medium (such as a non-transitory computer-readable medium) comprising program instructions stored thereon for performing (at least) any method as described herein (including the methods of the first and second aspects described above).

According to a seventh aspect, there is provided an apparatus comprising: at least one processor; and at least one memory including computer program code which, when executed by the at least one processor, causes the apparatus to perform (at least) any method as described herein (including the methods of the first and second aspects described above).

### BRIEF DESCRIPTION OF THE FIGURES

Embodiments of the invention will now be described by way of example only with reference to the figures, in which:
Figure 1 is a block diagram of a system in accordance with an example embodiment;
Figure 2 is a flow chart showing an example operation of the circuit of Figure 1;
Figure 3 is a block diagram of a system in accordance with an example embodiment;
Figure 4 is a flow chart showing an example operation of the system of Figure 3 in accordance with an example embodiment;
Figure 5 is a block diagram of a system in accordance with an example embodiment;
Figure 6 is a flow chart in accordance with an example embodiment;
Figure 7 is a block diagram of a system model in accordance with an example embodiment;
Figure 8 shows a neural network used in some example embodiments;
Figure 9 is a block diagram of a system in accordance with an example embodiment;
Figures 10 to 12 are flow charts in accordance with example embodiments;
Figure 13 is a block diagram of a system model in accordance with an example embodiment;
Figures 14 to 17 are flow charts in accordance with example embodiments; and
Figure 18 shows a system that can be used in implementations of example embodiments.

### DETAILED DESCRIPTION

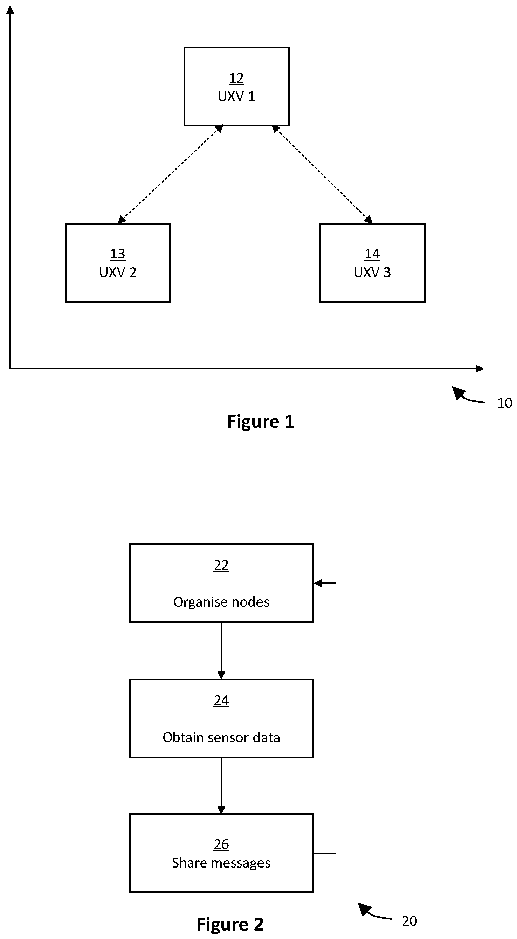

Figure 1 is a block diagram of a system, indicated generally by the reference numeral 10, in accordance with an example embodiment. The system 10 comprises a first uncrewed vehicle 12, a second uncrewed vehicle 13 and a third uncrewed vehicle 14. The uncrewed vehicles 12 to 14 may, for example, include uncrewed aerial vehicles (UAVs), uncrewed ground vehicles (UGVs), uncrewed underwater vehicles (UUVs) or combinations thereof. Other forms of uncrewed vehicles that could be used will be apparent to the skilled person. The various uncrewed vehicles are generally referenced herein with the acronym UXV.

The plurality of uncrewed vehicles of the system 10 form a "swarm" of uncrewed vehicles that are organised as a graph of nodes and edges, wherein each uncrewed vehicle of the plurality forms one of the said nodes and said edges represent communication links between said nodes. This is represented schematically in Figure 1 by plotting the positions of the UXVs 12 to 14 relative to an x-axis and a y-axis.

In the example system 10, the first uncrewed vehicles 12 is in two-way communication with both the second uncrewed vehicle 13 and the third uncrewed vehicle 14, but the second and third uncrewed vehicles are not in direct communication; by way of example, a physical barrier or some other impediment may exist between the current positions of the second and third uncrewed vehicles.

The uncrewed vehicles of the system 10 may form part of a swarm of uncrewed vehicles as part of a battlefield deployment. Of course, a real system is likely to include more than the three uncrewed vehicles of the system 10. It should be noted that some multi-domain and data-enabled battlespaces pose challenges for the control of uncrewed vehicles. This can be compounded by sensors, such as radars, increasingly demonstrating the ability to adapt their surveillance strategies to maximise performance.

Figure 2 is a flow chart, indicated generally by the reference numeral 20, showing an example operation of the circuit of Figure 1.

The flow chart 20 starts at step 22, where nodes of a plurality of uncrewed vehicles (such as the UXVs 12, 13 and 14) are organised. The step 22 may include defining a position of each of the uncrewed vehicles within the swarm (e.g. relative to each other).

At step 24, some or all of the uncrewed vehicles obtain sensor data. Such sensors may be used to obtain data relating, for example, to the physical and/or electromagnetic environment in which the respective uncrewed vehicle is operating, data regarding other uncrewed vehicles of the swarm and/or data relating to other devices (e.g. intruder devices and/or protected devices). A particular uncrewed vehicle may take one or more actions in response to the sensor data.

At step 26, messages are shared with one or more other uncrewed vehicles of the swarm; said messages may include data, such as at least some of the sensor data obtained in step 24. Sharing messages can enable a particular uncrewed vehicle to take decisions based, at least part, on sensor data obtained from other uncrewed vehicle of the swarm. The messages may include information relating to characteristics of the physical and/or electromagnetic environment that UXVs are operating in and/or information regarding potential threats. The messages may thereby include sensor data and/or higher-level salient information whose aggregation aids the situational awareness of the swam and/or of members of the swarm.

The flow chart 20 shows how the uncrewed vehicles of the system 10 (and similar systems) can communicate with neighbouring uncrewed vehicles of a swarm to transfer messages about the swarm, including under denied degraded intermittent (DDI) or limited communication constraints in congested and/or contested electromagnetic environments. For example, even though there is no direct link between the second UXV 13 and the third UXV 14, information can be shared between those UXVs by sending sensor data (in step 24) via the first UXV 12. This is sometimes referred to as multi-hop communication of beyond line-of-sight (BLOS) communication.

In this way, the system 10 enables graph-structured communications in which uncrewed vehicles of a swarm can communicate with other uncrewed vehicles in the swarm via messages transmitted (in one or more hops) via neighbouring devices in the swarm. For example, in the context of intruder detection, information concerning intruder sightings and movement across the graph-based swarm can be shared between nodes. This can be advantageous, for example, where at least one of the uncrewed vehicles of the swarm obtains noisy and/or partial data regarding the scene and/or where communications between nodes may be intermittent/unreliable.

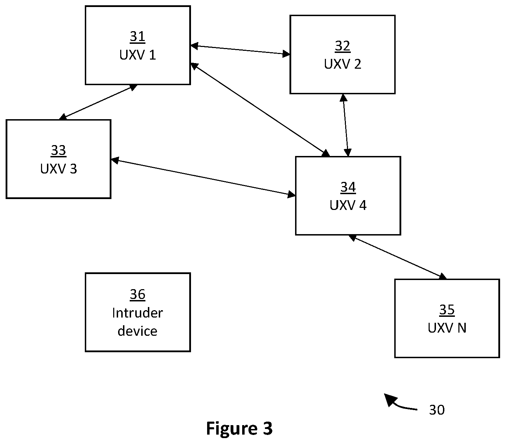

Figure 3 is a block diagram of a system, indicated generally by the reference numeral 30, in accordance with an example embodiment.

The system 30 comprises a first uncrewed vehicle, UXV1, 31, a second uncrewed vehicle, UXV2, 32, a third uncrewed vehicle, UXV3, 33, a fourth uncrewed vehicle, UXV4, 34, and a further uncrewed vehicle UXVN, 35, that collectively form a swarm of uncrewed vehicles. As discussed above with reference to the uncrewed vehicles 12 to 14, each of the uncrewed vehicles 31 to 35 may, for example, be an uncrewed aerial vehicle (UAV), an uncrewed ground vehicle (UGV), an uncrewed underwater vehicle (UUV) or some similar uncrewed vehicle.

As shown in Figure 3, UXV1 is in communication with each of UXV2, UXV3 and UXV4. UXV2 is in communication with UXV1 and UXV4. UXV3 is in communication with UXV1 and UXV4. UXV4 is in communication with UXV1, UXV2, UXV3 and UXVN. UXVN is in communication with UXV4. As discussed further below, the uncrewed vehicles 31 to 35 may be tasked with detecting and tracking intruders or threats in a monitored environment. Alternatively, or in addition, the uncrewed vehicles 31 to 35 may be tasked with detecting and reacting to radar sensors (e.g. enemy radar sensors in a battlefield scenario).

The system 30 also includes an intruder device 36 (e.g. a hostile device). The intruder device 36 may be an uncrewed vehicle or some other device.

The swarm of uncrewed vehicles 31 to 35 provides a communication framework for intruder detection. The swarm of uncrewed vehicles can communicate with neighbouring vehicles in the swarm to transfer messages about the swarm, including the presence, position or other status of the intruder device 36 and/or the presence, position or other status of radar sensors.

Note that individual links between uncrewed vehicles may be unreliable (e.g. the connections may be intermittent), but some communications can generally be expected to take place, even if intermittent and/or of low quality. In-fact, expected unreliability, e.g. in the form of denied degraded intermittent or limited (DDIL) communication, can be part of a training phase for the swarm; suitable training arrangements are discussed in detail below.

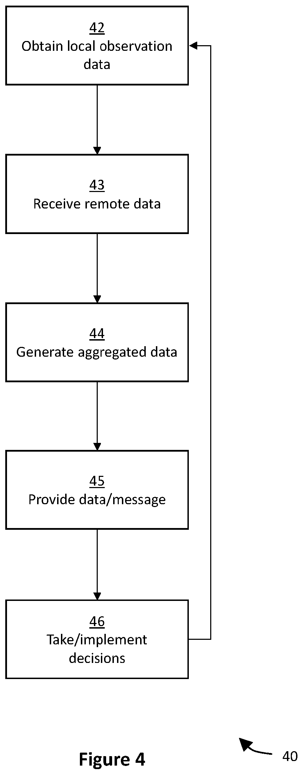

Figure 4 is a flow chart, indicated generally by the reference numeral 40, showing an example operation of the system of Figure 3 in accordance with an example embodiment. The flow chart 40 is described from the viewpoint of the first uncrewed vehicles, UXV1, of the system 30, but the algorithm shown in the flow chart 40 may be implemented at multiple (e.g. all) uncrewed vehicles of the system 30.

The flow chart 40 starts at step 42, where local observation data is obtained at the first uncrewed vehicle based, at least in part, on data from one or more sensors of the first uncrewed vehicle. The data obtained in the step 42 may include data relating to a scene, such as the electromagnetic environment (EME) of the first uncrewed vehicle. The data may include data (e.g. radar data) relating to other devices, such as the intruder device 36 and/or radar sensors.

Further examples of local observation data that might be obtained in step 42 include:
- a current position of one or more uncrewed vehicles (e.g. other uncrewed vehicles of a swarm) and/or one or more intruder devices;
- movement data for one or more uncrewed vehicles and/or one or more intruder devices, such as speed, velocity, bearing, or any other spatial-temporal characteristic;
- a monotonically decaying value representing a last sighting of a particular intruder device (e.g. the intruder device 36);
- a direction from a particular uncrewed vehicle to the last sighting of one or more intruder devices; and
- a node degree indicating a number of neighbouring uncrewed vehicles in communication with a particular uncrewed vehicle.

At step 43, remote data is received at the first uncrewed vehicle from each of one or neighbouring uncrewed vehicles. As discussed above, the uncrewed vehicles 31 to 35 form at least part of a plurality of uncrewed vehicles organised as a graph of nodes and edges, wherein each uncrewed vehicle of the plurality forms one of the said nodes and said edges represent communication links between said nodes. The remote data may be received from one or more uncrewed vehicles in direct contact with the first uncrewed vehicle (e.g. one or more of UXV2, UXV3 and UXV4 in the example system 30) and/or from one or more uncrewed vehicles not in direct contact with the first uncrewed vehicle (such as UXVN in the example system 30) via multi-hop communication.

The remote data (e.g. in the form of one or more messages as discussed above with reference to Figure 2) received from a particular other uncrewed vehicle in step 43 may include one or more of:
- Sensor data obtained by one or more sensors of that uncrewed vehicle;
- Data obtained at that uncrewed vehicle that has been processed in some way (e.g. to reduce data exchange requirements); and
- Aggregated data originating from multiple uncrewed vehicles (e.g. aggregated sensor data or aggregated processed sensor data).

At step 44, aggregated data is generated for the first uncrewed vehicle based on the local observation data (obtained in step 42) and the remote data (received in step 43). The aggregation is performed in accordance with a message aggregation scheme. As discussed elsewhere herein, an algorithm (e.g. a trained machine-learning algorithm) may be provided to the respective uncrewed vehicles for performing the aggregation in step 44.

The aggregated data generated in step 44 may include data relating to the uncrewed vehicles of the plurality. For example, such data may include one or more of:
- a location of the respective uncrewed vehicle; and
- movement data (e.g. speed, velocity, bearing or any other spatial-temporal characteristic) relating to the respective uncrewed vehicle; and
- a bearing of one or more of said intruder devices from the respective uncrewed vehicle.

Generating the aggregated data in step 44 may include one or more of: determining a maximum and/or a minimum of a plurality of datapoints; generating an average of a plurality of datapoints; and generating a weighted average of a plurality of datapoints. Other data aggregation arrangements will be readily apparent to the skilled person.

It should be noted that both the local observations of step 42 and the remote data of step 43 may include data relating to one or more intruder (e.g. hostile) devices (such as the intruder device 36). Similarly, the aggregated data may include information based on said data relating to said one or more intruder devices.

At step 45, data (e.g. in the form of one or more messages) is provided to one or more (e.g. all) neighbouring uncrewed vehicles of the first uncrewed vehicle for use as remote data by the respective neighbouring uncrewed vehicles (and may be the remote data received, at the respective node, in step 43). The data provided in the step 45 may be aggregated data (e.g. the aggregated data generated in step 44), but this is not essential for all example embodiments; for example, raw sensor data or processed sensor data may be provided.

At step 46, one or more decisions may be taken (and may be implemented) based, at least in part, on the aggregated data (as generated in step 44) for the first uncrewed vehicle, thereby enabling co-ordinated decision-making in a decentralised swarm of uncrewed vehicles. Example decisions include changing one or more of: a location of an uncrewed vehicle within the graph of nodes (e.g. relative to one or more intruder devices); a speed of movement of an uncrewed vehicle; and a direction of movement of an uncrewed vehicle.

At least some of the uncrewed vehicles of a swarm may have independent decision-making capability (thereby enabling distributed decision-making). For example, the swarm can be trained to detect and track intruders (such as the intruder device 36) using a machine learning approach that combines MADRL (such as Multi Agent Proximal Policy Optimisation, MAPPO) and Graph Machine Learning, GML (e.g. graph neural network, GNN). This enables GML-based communication (between nodes) and MADRL based actuation (at different nodes/uncrewed vehicles), for example uncrewed vehicle motion in a particular pattern. The MADRL component considers both local observations (from local sensors - see step 42) and aggregated messages obtained via GML approaches (from other nodes of the graph - see step 44).

Decision-making can take place at uncrewed vehicles even if communications with some (or all) other nodes is not possible. The distributed nature of aggregation of messages means that messages will tend to get through so that good (and consistent) decisions can be reached at different nodes.

In some example embodiments all nodes (e.g. all uncrewed vehicles of the system 30) have decision-making capabilities, but this is not essential to all example embodiments. For example, some uncrewed vehicles may be provided primarily for obtaining data.

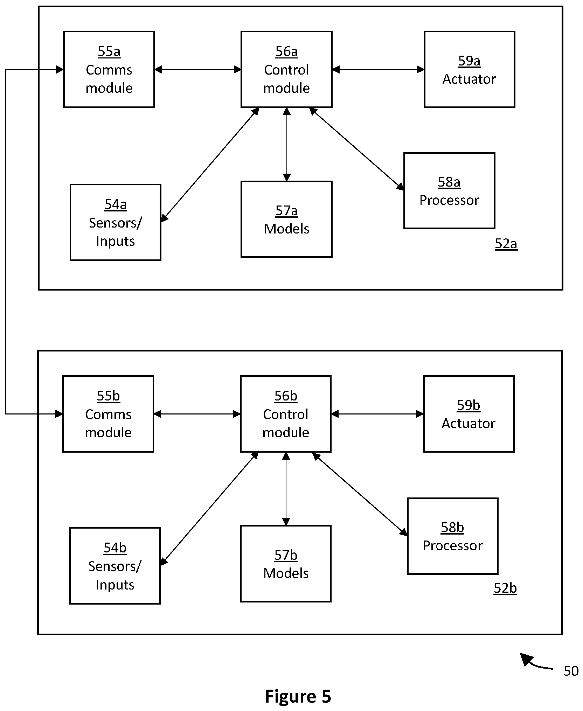

Figure 5 is a block diagram of a system, indicated generally by the reference numeral 50, in accordance with an example embodiment. The system 50 comprises a first uncrewed vehicle 52a and a second uncrewed vehicle 52b. The uncrewed vehicles 52a and 52b may, for example, be two of the uncrewed vehicles of the system 30 described above. Each of the uncrewed vehicles 52a and 52b may be able to implement the flow chart 40 described above.

The first uncrewed vehicle 52a comprises one or more sensors 54a, a communications module 55a, a control module 56a, one or more models 57a, a processor 58a and an actuator 59a. Similarly, the second uncrewed device 52b comprises one or more sensors 54b, a communications module 55b, a control module 56b, one or more models 57b, a processor 58b and an actuator 59b.

The sensors 54a, 54b (or some other input) can be used for obtaining local observation data relating to the respective uncrewed vehicle, thereby implementing step 42 of the flow chart 40. The sensors may include one or more imaging devices, one or more radio frequency sensors, one or more software defined radios (SDR), one or more Intelligence, Surveillance and Reconnaissance (ISR) sensors and/or one or more radar sensors. Other sensors that could be provided will be readily apparent.

The communication modules 55a, 55b may be used to receive remote data (e.g. remote sensor data) from each of one or neighbouring uncrewed vehicles and to provide information (such as aggregated information) to neighbouring uncrewed vehicles. The communication modules may thereby implement steps 43 and 45 of the flow chart 40.

The control modules 56a, 56b may be used to generate aggregated data for the respective uncrewed vehicle based, at least in part, on the local observation data (including data obtained by the respective sensors - see step 42) and the remote data (obtained by the respective communication module - see step 43). As discussed elsewhere, the aggregated data may be generated (by the respective control module) in accordance with a message aggregation scheme. The message aggregation scheme may comprise a model (e.g. an ML model) that may be one of the models 57a, 57b.

The processors 58a, 58b may take one or more decisions based, at least in part, on the aggregated data for the first uncrewed vehicle. The decisions may be taken based on a model (e.g. an ML model) that may be one of the models 57a, 57b. Example decisions include changes to locations, speeds or velocities of one or more uncrewed vehicles, as discussed above.

The actuators 59a, 59b may be used to implement decisions made by the respective processors. Example actuators include motors.

The communication modules 55a and 55b are connected via communication links. The communication links are typically local, short-range communication link. The communication links may be intermittent and/or unreliable and may change over time (e.g. as the respective uncrewed vehicles move).

It should be noted that the modules of the first uncrewed vehicle 52a and the second uncrewed vehicle 52b are schematic and are provided by way of example only. The modules may differ from those shown in Figure 5 (and the modules of the first and second uncrewed vehicles may differ from each other). For example, the functionality of some modules may be merged (such as the functionality of the control modules and the processors). Moreover, some functionality may be omitted from one or both of the uncrewed vehicles shown (e.g. the processor 58 may be omitted from some uncrewed vehicles, for example if a particular uncrewed vehicle does not have decision-making capabilities).

It should be noted, of course, that two uncrewed vehicles are shown in Figure 5 for ease of description. As discussed above, example implementations may include many more uncrewed vehicles.

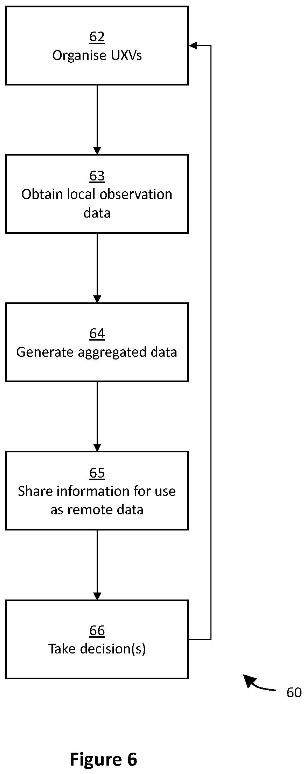

Figure 6 is a flow chart, indicated generally by the reference numeral 60, in accordance with an example embodiment.

The flow chart 60 starts at step 62, where a plurality of uncrewed vehicles are organised as a graph of nodes and edges. As discussed in detail above, each uncrewed vehicle of the plurality forms one of the said nodes and said edges represent communication links between said nodes, wherein each of the plurality of uncrewed vehicles has a position within the graph of nodes. By way of example, the step 62 may organise the uncrewed vehicles 31 to 35 of the system 30 described above.

At step 63, local observation data is obtained at one or more (e.g. all) of the plurality of uncrewed vehicles, e.g. including data from one or more sensors of the respective uncrewed vehicles. The local observation data may be obtained, for example, by the sensors/inputs 54a and 54b described above. Note that some uncrewed vehicles of the plurality may not obtain local observation data (e.g. if said uncrewed vehicles do not have the appropriate sensors or inputs).

At step 64, aggregated data is generated locally at each uncrewed vehicle, in accordance with a message aggregation scheme, based on the local observation data obtained at the respective uncrewed vehicle and, if available, remote data (e.g. aggregated sensor data) received from one or more neighbouring nodes. The message aggregation may be performed in accordance with a received model (e.g. as a model generated as a result of training, such as MADRL training, as discussed herein). The step 64 may, for example, be implemented by the control modules 56a, 56b described above.

The local observation data and the remote data may include data (e.g. sensor data or processed sensor data) relating to one or more first devices (e.g. intruder devices, as discussed above) and/or relating to one or more second devices (e.g. protected devices, as discussed below). Similarly, said aggregated data may include information based on said data relating to said one or more first devices and/or relating to said one or more second devices.

The aggregated data generated in step 64 may comprise one or more of: data relating to the uncrewed vehicles of the plurality; data relating to one or more first devices (e.g. intruder devices); and data relating to one or more second devices (e.g. protected devices).

At step 65, information is communicated between nodes for use as said remote data (e.g. in an instance of step 64). The information may comprise aggregated data (e.g. aggregated sensor data). The step 64 may, for example, be implemented by the communication modules 55a, 55b.

At step 66, one or more decisions are taken at one or more of said nodes based, at least in part, on the aggregated data generated at the respective node. As discussed above, an algorithm (e.g. a ML algorithm) may be provided to one or more of said uncrewed vehicles for taking said decisions. The step 66 may be implemented, for example, by the processors 58a, 58b (and may be executed by the actuators 59a, 59b). As noted above, some uncrewed vehicles of the plurality may omit step 66.

The data relating to one or more of said one or more first (e.g. intruder) devices comprises one or more of: an indication of whether presence of a respective first device is detected by the respective uncrewed vehicle; a decaying value (e.g. exponentially decay value) representing a last sighting of one of said first devices by the respective uncrewed vehicle; and a direction or location of one of said first devices detected by the first uncrewed vehicle.

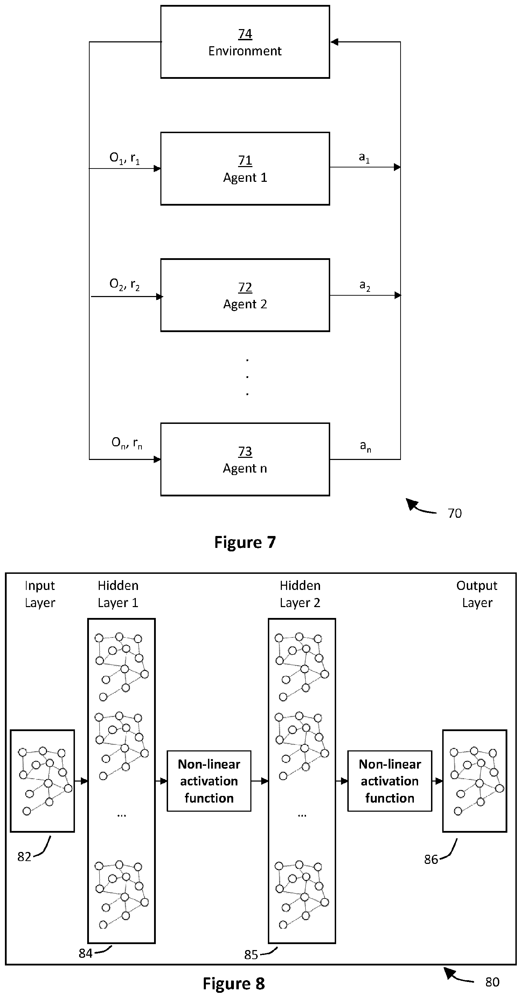

Figure 7 is a block diagram of a system model, indicated generally by the reference numeral 70, in accordance with an example embodiment. The system model 70 may be used to model systems such as the systems 10 and 30 described above and the system 90 described below.

The system model 70 comprises a plurality of agents, including a first agent 71, a second agent 72 and an nth agent 73, and also includes an environment 74. Each agent represents one of the uncrewed vehicles of the systems describes herein and the environment 74 represents the environment (including the electromagnetic environment) in which the uncrewed vehicles operate.

Each agent receives an input from the environment 74 and provides an output to the environment. Within the diagram *oᵢ* represents the local observation for each agent i. Upon receiving an observation each agent i takes an action *aᵢ*. During training rewards *rᵢ* can be used to train AI agents using incentive-based learning approaches, e.g., reinforcement learning or genetic algorithms, as discussed further below.

Using the environment, the agents are trained in accordance with machine learning principles to modify the functionality of the system that the system model 70 is modelling. For example, the agents can be trained to maximise rewards when defining what the agents do within the environment 74, including how the agents react to intruder devices. For example, positive rewards can be returned by the training environment for agents detecting an intruder agent, or for preventing the intruder agent from completing its objective.

The models describing the agents 71 to 73 can be provided to respective uncrewed vehicles and may be stored as the models 57 described above.

By way of example, the agents 71 to 73 may describe trainable message aggregation schemes that can be used to generate the aggregated data in step 44 of the algorithm 40. Alternatively, or in addition, the agents 71 to 73 may describe decision-making algorithms used in step 46 of the algorithm 40.

Figure 8 shows a neural network, indicated generally by the reference numeral 80, used in some example embodiments. For example, the neural network 80 may be used to describe the agents 71 to 73 described above and may be the models 57 of the uncrewed vehicles 52 described above.

The neural network 80 comprises a first layer 82, one or more hidden layers 84, 85, and an output layer 86. Input data (such as sensor data and/or remote data) may be provided to the first layer 82. Processed data, such as aggregated sensor data for each node (represent an individual agent), may be output by the output layer 86.

Parameters of the neural network 80 can be updated in accordance with machine-learning principles to modify the performance of the model (and thereby to modify the performance of the respective agent). For example, as discussed above, the agents can be trained to maximise rewards when defining what the agents do within the environment 74, including how the agents react to intruder devices.

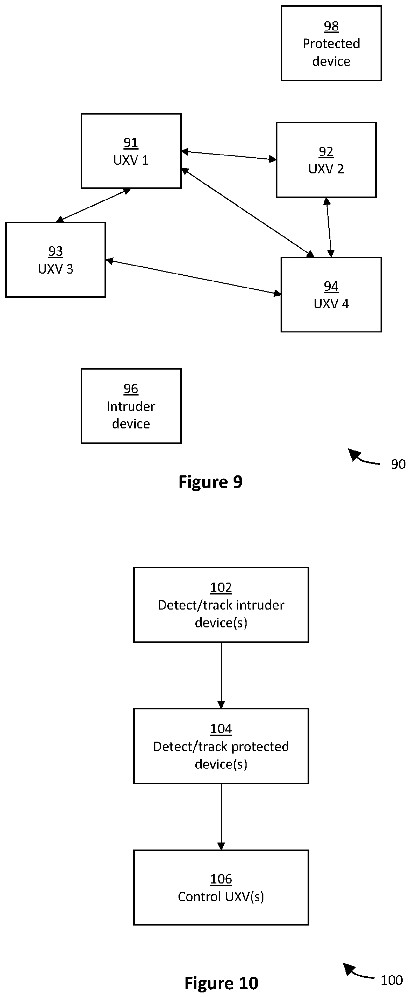

Figure 9 is a block diagram of a system, indicated generally by the reference numeral 90, in accordance with an example embodiment.

The system 90 comprises a first uncrewed vehicle, UXV1, 91, a second uncrewed vehicle, UXV2, 92, a third uncrewed vehicle, UXV3, 93, and a fourth uncrewed vehicle, UXV4, 94. The UXVs 91 to 94 can operate as a "swarm" of uncrewed vehicles and may be similar to the first to fourth uncrewed vehicles of the system 30 described above. The system 90 further comprises an intruder device 96 (which is one of one or more intruder devices) and a protected device 98 (which is one of one or more protected device).

As shown in Figure 9, the first uncrewed vehicle, UXV1, is in communication with each of UXV2, UXV3 and UXV4. The second uncrewed vehicles, UXV2, is in communication with UXV1 and UXV4. The third uncrewed vehicle, UXV3, is in communication with UXV1 and UXV4. The fourth uncrewed vehicle, UXV4, is in communication with UXV1, UXV2 and UXV3. As discussed further below, the uncrewed vehicles 91 to 94 may be tasked with detecting and tracking intruders or threats (such as the intruder device 96) in a monitored environment and may be tasked with protecting devices such as the protected device 98.

The plurality of uncrewed vehicles 91 to 94 provides a communication framework for the detection and tracking of intruder devices (such as the intruder device 96) and/or protected devices (such as the protected device 96). The uncrewed vehicles can communicate with neighbouring uncrewed vehicles in the swarm to transfer messages about the swarm, including the presence of the intruder device 96 and/or the protected device 96.

Note that, as discussed above, individual links between uncrewed vehicles may be unreliable (e.g. the connections may be intermittent), but some communications can generally be expected to take place, even if intermittent and/or of low quality. In-fact, expected unreliability, e.g. in the form of DDIL communication, can be part of the training phase, for obtaining a robust and resilient swarm of intrusion detection agents.

Figure 10 is a flow chart, indicated generally by the reference numeral 100, in accordance with an example embodiment.

The flow chart 100 starts at step 102 where one or more intruder devices (such as the intruder device 96) are detected and tracked. At step 104 one or more protected devices (such as the protected device 98) are detected and tracked. Of course, the operations 102 and 104 may be carried out simultaneously, or in a different order.

At step 106 of the flow chart 100, one of more of the uncrewed device of the plurality (e.g. the uncrewed devices 91 to 94) are controlled based on the outcome of the steps 102 and 104. Such action may include changing a swarm formation of the uncrewed devices in response to parameters of one or more intruder device and/or parameters of one or more protected devices.

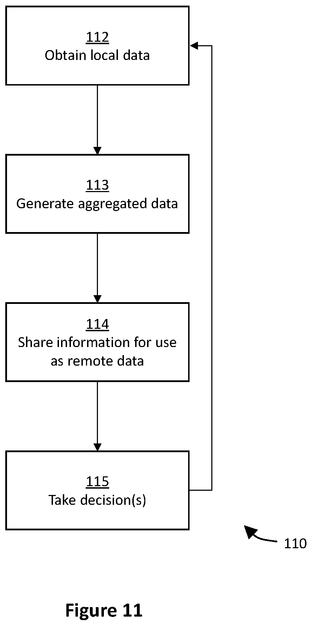

Figure 11 is a flow chart, indicated generally by the reference numeral 110, in accordance with an example embodiment.

The flow chart 110 starts at step 112, where local observation data is obtained at one or more (e.g. all) of a plurality of uncrewed vehicles (such as the UXVs 91 to 94). The local observation data may include data from one or more sensors of the respective uncrewed vehicles. Note that some uncrewed vehicles of the plurality may not obtain local observation data (e.g. if said uncrewed vehicles do not have the appropriate sensors/inputs).

The local data obtain at the step 112 may include one or more of: data relating to the uncrewed vehicles of the plurality (such as the uncrewed vehicles 91 to 94); data relating to one or more intruder devices (such as the intruder device 96); and data relating to one or more protected devices (such as the protected device 98).

The data relating to a protected device may include one or more of:
- an indication of whether presence of a respective protected device is detected by the respective uncrewed vehicle;
- a direction or location of a particular protected device detected by the respective uncrewed vehicle; and
- a decaying value (e.g. exponentially decay value) representing a last sighting of a particular protected device by the respective uncrewed vehicle.

Similarly, the data relating to an intruder device may include one or more of:
- an indication of whether presence of a respective intruder device is detected by the respective uncrewed vehicle;
- a direction or location of a particular intruder device detected by the respective uncrewed vehicle; and
- a decaying value (e.g. exponentially decay value) representing a last sighting of a particular intruder device by the respective uncrewed vehicle.

The data relating to a protected device may include a direction or bearing from the respective uncrewed vehicle to a particular protected device. Similarly, the data relating to an intruder device may include a direction or bearing from the respective uncrewed vehicle to a particular intruder device. Alternatively, or in addition, the data may include an identify of an intruder or protected device (e.g. based on sensory data such as RF, radar signature, vision-based, etc.)

At step 113, aggregated data (e.g. aggregated sensor data) is generated locally at each uncrewed vehicle, in accordance with a message aggregation scheme, based on the local observation data obtained at the respective uncrewed vehicle and, if available, remote data (e.g. aggregated data) received from one or more neighbouring nodes. The message aggregation may be performed in accordance with a received model (e.g. as a model generated as a result of training, such as MADRL training, as discussed herein).

The local observation and the remote data include data relating to one or more first devices (e.g. intruder devices, as discussed above). Similarly, said aggregated data includes information based on the data relating to said one or more first devices.

The aggregated data generated in step 113 may comprise one or more of: data relating to the uncrewed vehicles of the plurality (such as the uncrewed vehicles 91 to 94); data relating to one or more intruder devices (such as the intruder device 96); and data relating to one or more protected devices (such as the protected device 98).

At step 114, information is communicated between nodes for use as said remote data (in an instance of step 113). The information may comprise aggregated data.

At step 115, one or more decisions are taken at one or more of said nodes based, at least in part, on the aggregated data generated at the respective node. As discussed above, an algorithm (e.g. a ML algorithm) may be provided to one or more of said uncrewed vehicles for taking said decisions. By way of example, UXVs may be directed to seek to confuse intruder device (in order, for example, to hide a protected device).

In the context of a system, such as the system 90, including both intruder device(s) 96 and protected device(s) 98, an adversarial learning framework can be deployed in which a plurality of uncrewed vehicles operate as a swarm to protect the protected device(s) 98 against the intruder device (96). An AI/ML approach, as discussed further below, can be adopted to develop swarm navigation strategies, applied in instances of the operation 115 on each of selected key nodes, that seek to provide the desired protection (e.g. by confusing an intruder device).

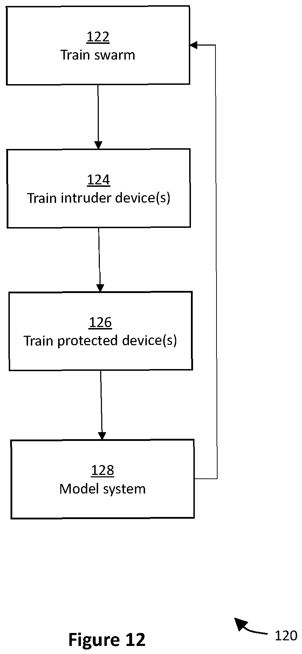

Figure 12 is a flow chart, indicated generally by the reference numeral 120, in accordance with example embodiments. The flow chart 120 may be used to train functionality within a system, such as the system 90 described above.

The flow chart 120 starts at step 112, where a plurality (e.g. a swarm) of uncrewed vehicles is trained. At step 124, an expected functionality of one or more intruder devices that the swarm is intended to interact with is trained. The step 124 may, for example, anticipate how intruder devices may react to the trained functionality of the swarm. At step 126, an expected functionality of one or more protected devices that the swarm is intended to interact with is trained. The step 126 may, for example, anticipate how the protected device may react to the trained functionality of the swarm and the intruder device(s). A system including the uncrewed vehicles trained in step 122, the one or more intruder devices trained in the step 124 and the one or more protected devices trained in step 126 is modelled in step 128. The flow chart then returns to step 122 so that the swarm and intruder device training can be updated.

It should be noted that some of the steps over the flow chart 110 may be omitted. For example, the functionality of the intruder device(s) and/or the protected device(s) may not be adjustable so that one or both of the steps 124 and 126 may be omitted.

The training regime of Figure 12 may be used to iteratively improve strategies for the swarm of uncrewed vehicles (step 122) and strategies for intruder devices (step 124). Adversarial learning frameworks guided by solution concepts from game theory can result in desirable policies that can generalise across different types of adversary. If well designed, such a development-evaluation environment can provide a good representation of real setting in which uncrewed vehicles may be deployed in practice.

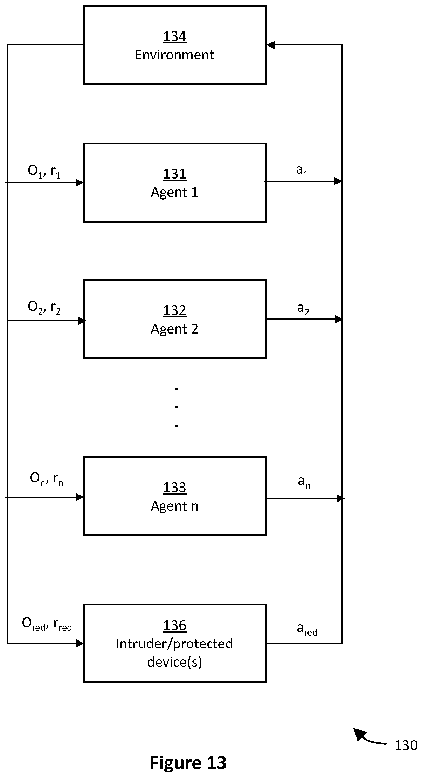

Figure 13 is a block diagram of a system model, indicated generally by the reference numeral 130, in accordance with an example embodiment. The system model 130 may be used in an implementation of the algorithm 120 described above.

The system model 130 comprises a plurality of agents, including a first agent 131, a second agent 132 and an nth agent 133 (which may be similar to the first agent 71, the second agent 72 and the nth agent 73 of the system model 70 described above). The system model 130 includes an environment 134 (similar to the environment 74). One or more intruder and/or protected device models are modelled schematically by the intruder/protect device(s) 136. Note that the intruder/protect device(s) may comprise a plurality of models (e.g. modelling different intruder devices, different protected devices, or separate intruder and protected devices).

Each agent 131-133 and intruder/protected device model 136 receives an input from the environment 134 and provides an output to the environment. At least some of the agents and the intruder/protected devices are trained in accordance with machine learning principles to adjust the functionality of the system that the system model 130 is modelling (thereby implementing steps 124 and 126 of the algorithm 120. The environment 134 can also be trained, as discussed above.

As discussed above, the agents can be trained to maximise rewards when defining what the agents do within the environment 134, including how the agents react to intruder devices. Similarly, the intruder devices can be trained to maximise rewards when defining what the intruder devices might do within the environment 134. Protected devices can be trained according to the same principles.

The models describing the agents 131 to 133 can be provided to respective uncrewed vehicles and may, for example, be stored as the models 57 described above.

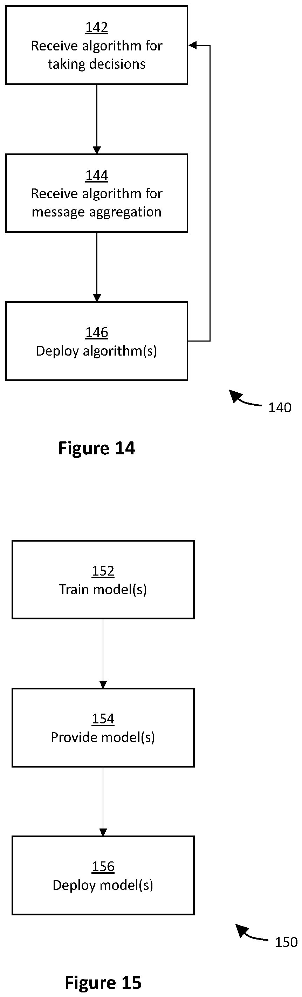

Figure 14 is a flow chart, indicated generally by the reference numeral 140, in accordance with example embodiments. The flow chart 140 may be implemented at one or more of the uncrewed vehicles described herein.

The flow chart 140 starts at step 142, where the uncrewed vehicle receives an algorithm (e.g. a machine-learning algorithm) for taking decisions. The algorithm may be a MADRL algorithm trained in accordance with the principles outlined above, a hard-coded algorithm or a combination thereof.

At step 144, the uncrewed vehicle received an algorithm (e.g. a machine-learning algorithm) for implementing a message aggregation scheme. Such a message aggregation scheme may be used to generate aggregated data (e.g. aggregated sensor data) as discussed in detail above. The algorithm could be machine-learning based (e.g. where each "hop" described above is a GNN layer, with learnt parameters), rules-based (e.g. using hand-coded algorithms), or a hybrid approach could be used (e.g. here a hop could be either rules-based or machine-learning).

At step 146, the algorithms received in steps 142 and 144 are deployed at the respective uncrewed vehicle.

Figure 15 is a flow chart, indicated generally by the reference numeral 150, in accordance with example embodiments. The flow chart 150 may be used to generate one or more of the algorithms referred to in the flow chart 140.

The flow chart 150 starts at step 152, where an algorithm (e.g. a machine-learning algorithm) for taking decisions at one or more uncrewed vehicles is generated. The algorithm may be a MADRL algorithm trained in accordance with the principles outlined above, a hard-coded algorithm or a combination thereof. The algorithm generated in the step 152 may be a modification of a pre-existing algorithm or may be generated from scratch.

At step 154, an algorithm (e.g. a machine-learning algorithm) for implementing a message aggregation scheme at one or more uncrewed vehicles is generated. Such a message aggregation scheme may be used to generated aggregated data (e.g. aggregated sensor data) as discussed in detail above. The algorithm could be machine-learning based (e.g. where each "hop" described above is a GNN layer, with learnt parameters), rules-based (e.g. using hand-coded algorithms), or a hybrid approach could be used (e.g. here a hop could be either rules-based or machine-learning). The algorithm generated in the step 154 may be a modification of a pre-existing algorithm or may be generated from scratch.

At step 156, the algorithms generated in steps 152 and 154 are deployed at one or more uncrewed vehicles (e.g. in accordance with the flow chart 140 described above).

Of course, that flow charts 140 and 150 are schematic and may be implemented in other ways. For example, the steps 142 and 144 of the flow chart 140 could be implemented in a different order or at the same time, or one of the steps 142 and 144 may be omitted. Similarly, the steps 152 and 154 of the flow chart 150 could be implemented in a different order or at the same time, or one of the steps 152 and 154 may be omitted.

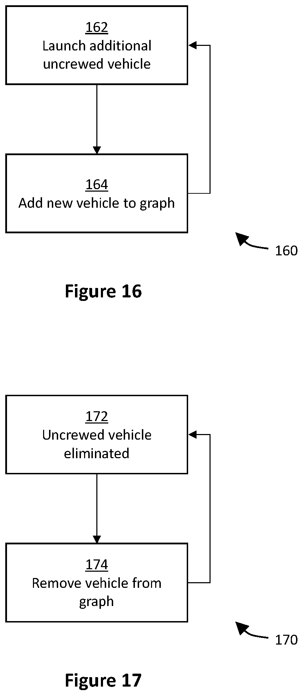

Figure 16 is a flow chart, indicated generally by the reference numeral 160, in accordance with example embodiments. The flow chart 160 starts at step 162 where an additional uncrewed vehicle is launched. At step 164, the additional uncrewed vehicle is added to a graph of nodes and edges of an existing plurality of uncrewed vehicles. In this way, one or more additional uncrewed vehicles can be added to an existing swarm of uncrewed vehicles. This may add existing functionality to an existing swarm.

Figure 17 is a flow chart, indicated generally by the reference numeral 170, in accordance with example embodiments. The flow chart 170 starts at step 172 where an uncrewed vehicle is eliminated. At step 174, the eliminated uncrewed vehicle is removed from a graph of nodes and edges of an existing plurality of uncrewed vehicles. By way of example, an existing uncrewed vehicle of a swarm may be lost due to damage or destroyed by enemy action or in some other way.

The flow charts 160 and 170 demonstrate the ad-hoc nature of groups/swarms of uncrewed vehicles in some example embodiments.

Advantages of at least some of the embodiments described herein include the provision of:
- Adaptable swarms of uncrewed vehicles that can response to changes in a scene and to changes in an electromagnetic environment.
- Scalable and modular systems in which the size of a swarm can be changed.
- Low cost solutions by providing relatively low-cost uncrewed vehicles.
- Resilient systems that can adapt to the loss of one or more uncrewed devices and/or to the loss of one or more communication links.
- Versatile solutions that can, for example, transition between different terrains by deploying suitable uncrewed vehicle types (e.g. uncrewed aerial vehicles, uncrewed ground vehicles, uncrewed underwater vehicles etc.).
- Autonomous device allowing on-edge implementation (i.e. at individual uncrewed vehicles).
- Locally deployed algorithms that seek to provide high performance, even in congested and contested operational theatres.
- Reduced risk of revealing location of operators or control sensors due to the distributed communications and control.

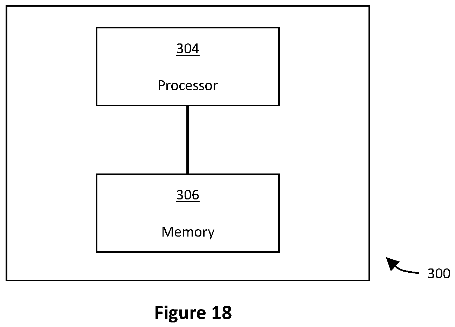

Figure 18 shows a system 300 (comprising a memory 306 and processor 304) that can be used in implementations of example embodiments described herein. The processor 304 (e.g. a CPU) may store a computer program for implementing aspects of one or more of the algorithms described herein (such as the flow charts 20, 40, 60, 100, 110, 120, 140, 150, 160 or 170 described above). In practice, the processor 304 is likely to be a digital signal processor (DSP) including processing blocks such as multipliers, adder/subtractors, and storage registers. The processing may be performed in parallel using pipelines and local registers to enable a high processing rate and data throughput.

Embodiments of the components described herein can be implemented using any suitable software, hardware or firmware applications, programming language, data editors, etc., and may be represented/stored/processed using any suitable data structures, and so on.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method comprising:
obtaining, at a first uncrewed vehicle, local observation data based, at least in part, on data from one or more sensors of the first uncrewed vehicle;
receiving, at the first uncrewed vehicle, remote data from each of one or neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes;
generating aggregated data for the first uncrewed vehicle based on the local observation data and the remote data in accordance with a message aggregation scheme;
providing information to one or more of said neighbouring uncrewed vehicles for use as remote data by said neighbouring uncrewed vehicles; and
taking one or more decisions based, at least in part, on the aggregated data for the first uncrewed vehicle,
wherein the local observation data and the remote data include data relating to one or more first devices and said aggregated data includes information based on said data relating to said one or more first devices.

2. The method of claim 1, wherein the data relating to one or more of said one or more first devices comprises one or more of:
an indication of whether presence of a respective first device is detected by the respective uncrewed vehicle;
a decaying value representing a last sighting of one of said first devices by the respective uncrewed vehicle; and
a direction or location of one of said first devices detected by the first uncrewed vehicle.

3. The method of claim 1 or claim 2, further comprising:
receiving an algorithm for taking said decisions; and/or
receiving an algorithm for implementing said message aggregation scheme.

4. The method of any one of claims 1 to 3, wherein said one or more decisions comprises changes to one or more of:
a location of the first uncrewed vehicle within the graph of nodes;
a speed of movement of the first uncrewed vehicle; and
a direction of movement of the first uncrewed vehicle.

5. The method of any one of the preceding claims, wherein the remote data received from each of said one or more neighbouring uncrewed vehicles comprises aggregated data and/or the information provided to said one or more neighbouring uncrewed vehicles comprises aggregated data.

6. A method as claimed in any one of the preceding claims, further comprising detecting one or more of said one or more first devices.

7. The method of any one of the preceding claims, wherein the local observation data comprises one or more of:
a current position of the first uncrewed vehicle;
movement data for the first uncrewed vehicle;
a monotonically decaying value representing a last sighting of one of said first devices;
a direction from the first uncrewed vehicle to a location of the last sighting of one of said first devices; and
a node degree indicating a number of neighbouring uncrewed vehicles in communication with the first uncrewed vehicle.

8. The method of any one of the preceding claims, wherein the aggregated data for the first uncrewed vehicle comprises data relating to the uncrewed vehicles of the plurality, including the first uncrewed vehicle, wherein the data relating to the uncrewed vehicles of the plurality optionally comprises one or more of:
a location of the respective uncrewed vehicle;
movement data relating to the respective uncrewed vehicle; and
a bearing of one or more of said first devices from the respective uncrewed vehicle.

9. The method of any one of the preceding claims, wherein the aggregated data for the first uncrewed vehicle comprises:
data relating to one or more second devices, wherein each second device is a protected device.

10. The method of claim 9, wherein:
the local observation data comprises a direction from the first uncrewed vehicle to one or more of said second devices; and/or
the data relating to the uncrewed vehicles of the plurality comprises a bearing of one or more of said second devices from the respective uncrewed vehicle; and/or
the data relating to one or more of said one or more second devices comprises one or more of: an indication of whether presence of a respective second device is detected by the respective uncrewed vehicle; and a direction or location of one of said second devices detected by the first uncrewed vehicle.

11. The method of any one of the preceding claims, wherein generating said aggregated data for the first uncrewed vehicle, in accordance with said message aggregation scheme, comprises one or more of:
determining a maximum and/or a minimum of a plurality of datapoints;
generating an average of a plurality of datapoints; and
generating a weighted average of a plurality of datapoints.

12. A method comprising:
organising a plurality of uncrewed vehicles as a graph of nodes and edges, wherein each uncrewed vehicle of the plurality forms one of the said nodes and said edges represent communication links between said nodes, wherein each of the plurality of uncrewed vehicles has a position within the graph of nodes;
obtaining local observation data at one or more of said plurality of uncrewed vehicles from one or more sensors of the respective uncrewed vehicles;
locally generating aggregated data at each uncrewed vehicle, in accordance with a message aggregation scheme, based on the local observation data obtained at the respective uncrewed vehicle and, if available, remote data received from one or more neighbouring nodes;
communicating information between nodes for use as said remote data; and
taking one or more decisions at one or more of said nodes based, at least in part, on the aggregated data generated at the respective node
wherein the local observation data and the remote data include data relating to one or more first devices and said aggregated data includes information based on said data relating to said one or more first devices.

13. The method of any one of the preceding claims, wherein:
the one or more sensors comprises one or more of: one or more imaging devices; one or more radio frequency sensors; and one or more radar sensors; and/or
the one or more first devices are intruder devices.

14. The method of any one of the preceding claims, further comprising:
adding a further uncrewed vehicle to the plurality of uncrewed vehicles organised as said graph of nodes and edges and/or
removing one of said uncrewed vehicles from the plurality of uncrewed vehicles organised as said graph of nodes and edges.

15. A first uncrewed vehicle comprising:
one or more sensors for obtaining local observation data relating to the first uncrewed vehicle;
a communication module for receiving remote data from each of one or neighbouring uncrewed vehicles and for providing information to one or more of said neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes, wherein the first uncrewed vehicle has a position within the graph of nodes;
a control module for generating aggregated data for the first uncrewed vehicle based on the local observation data and the remote data in accordance with a message aggregation scheme, wherein the communication module is configured to provide the generated aggregated data for the first uncrewed vehicle to one or more of said neighbouring uncrewed vehicles; and
a processor for taking one or more decisions based, at least in part, on the aggregated data for the first uncrewed vehicle,
wherein the local observation data and the remote data include data relating to one or more first devices and said aggregated data includes information based on said data relating to said one or more first devices.
